# EUROPÄISCHE PATENTSCHRIFT

(11) **EP 2 225 320 B1**
(45) Veröffentlichungstag und Bekanntmachung des Hinweises auf die Patenterteilung: **08.05.2013**
(21) Anmeldenummer: 08864043.8
(22) Anmeldetag: 16.12.2008
(51) Int. Cl.: C08K 5/00, C08K 5/49, C08L 67/02, C08L 69/00

(54) **FLAMMGESCHÜTZTE SCHLAGZÄHMODIFIZIERTE POLYALKYLENTEREPHTHALAT/POLYCARBONAT-ZUSAMMENSETZUNGEN**
FLAME-RETARDANT, IMPACT-RESISTANT MODIFIED POLYALKYLENE TEREPHTHALATE/POLYCARBONATE COMPOSITIONS
COMPOSITIONS IGNIFUGÉES DE POLYALKYLÈNE TÉRÉPHTALATE ET DE POLYCARBONATE À RÉSILIENCE MODIFIÉE

(30) Priorität: 20.12.2007 DE 102007061760
(43) Veröffentlichungstag der Anmeldung: 08.09.2010
(73) Patentinhaber: Bayer MaterialScience AG, 51368 Leverkusen (DE)
(72) Erfinder: MOULINIE, Pierre, Imperial, PA 15126 (US); TASCHNER, Vera, 50823 Köln (DE); WENZ, Eckhard, 50996 Köln (DE); WITTMANN, Dieter, 51375 Leverkusen (DE)
(86) Internationale Anmeldenummer: PCT/EP2008/010694
(87) Internationale Veröffentlichungsnummer: WO 2009/080244

(56) Entgegenhaltungen:
- DE-A1- 19 904 814
- DE-A1-102004 049 342

## Beschreibung

Die vorliegende Erfindung betrifft schlagzähmodifizierte Polyalkylenterephthalt/Polycarbonat-Zusammensetzungen, welche ein Salz einer Phosphinsäure enthalten, die Verwendung der schlagzähmodifizierten Polyalkylenterephthal/Polycarbonat-Zusammensetzungen zur Herstellung von Formkörpern und die Formkörper selbst.

WO-A 2005/044906 offenbart thermoplastische Formmassen enthaltend mindestens ein Metallsalz der Hypophosphorsäure und mindestens ein aromatisches Polycarbonatharz und deren Mischung mit einem styrolhaltigen Pfropfcopolymerharz mit einem Kautschukanteil von 5-15%. Die Anteile des styrolhaltigen Pfropfcopolymers betragen 10-40 Gew.-%. Die erhaltenen Formmassen zeichnen sich durch gute Flammwidrigkeit, hohe thermische Stabilität unter Verarbeitungsbedingungen und guter Wetter-Resistenz aus. Aufgrund des niedrigen Kautschukanteiles sind andere Eigenschaften, insbesondere mechanische Eigenschaften auf einem niedrigen Niveau.

WO-A 1999/57192 beschreibt thermoplastische Formmassen enthaltend 5-96 Gew.% eines Polyesters oder Polycarbonat, 1-30 Gew.% eines Phosphinsäuresalzes und/oder eines Diphosphinsäuresalzes und/oder deren Polymere, 1-30 Gew.% mindestens eines organischen phosphorhaltigen Flammschutzmittels, und mögliche weitere Additive.

DE-A 102004049342 offenbart thermoplastische Formmassen enthaltend 10-98 Gew.% thermoplastisches Polymer, 0,01 - 50 Gew.% hochverzweigtes Polycarbonat oder hochverzweigter Polyesters oder deren Mischungen, 1-40 Gew.% halogenfreies Flammschutzmittels ausgewählt aus der Gruppe der P-haltigen oder N-haltigen Verbindungen oder der P-N-Kondensate oder deren Mischungen, und mögliche weitere Additive.

DE-A 19904814 beschreibt thermoplastische Formmassen, enthaltend 20-98 Gew.% eines Polyesters, 1-50 Gew.% eines Polycarbonats, 1-40 Gew.% eines Phosphinsäuresalzes und/oder eines Diphosphinsäuresalzes und/oder deren Polymere, und mögliche weitere Additive.

JP-A 2001-335699 beschreibt flammgeschützte Harzzusammensetzungen enthaltend zwei oder mehrere thermoplastische Harze ausgewählt aus Styrolharz, aromatisches Polyesterharz, Polyamidharz, Polycarbonatharz und Polyphenylenetherharz und ein oder mehrere (an)organische Phosphinsäuresalze, und mögliche weitere Additive.

JP-A 2001-261973 (Daicel Chemical Industries Ltd.) beschreibt Zusammensetzungen aus thermoplastischen Harzen und (an)organischen Phosphinsäuresalzen. Als Beispiel ist eine Kombination angeführt aus PBT, Calciumphosphinat und PTFE.

JP-A 2002-161211 offenbart Zusammensetzungen aus thermoplastischen Harzen und Flammschutzmitteln wie Salzen der Phosphin- und Phosphorsäure und deren Derivate. Als Beispiel ist eine Kombination angeführt aus PBT, ABS, Polyoxyphenylen, Calciumphosphinat, einem Organophosphat und Glasfasern.

Nach dem Stand der Technik übliche Flammschutzmittel für Polyalkylenterephthalt/Polycarbonat-Zusammensetzungen sind organische, aromatische Phosphate. Diese Verbindungen können niedermolekular, als Gemisch verschiedener Oligomeren oder als Gemisch von Oligomeren mit niedermolekularen Verbindungen vorliegen (z.B. WO-A 99/16828 und WO-A 00/31173). Der guten Wirksamkeit als Flammschutzmittel steht die stark weich machende Wirkung dieser Verbindungen auf die polymeren Bestandteile als Nachteil entgegen, so dass die Wärmeformbeständigkeit dieser Formmassen für viele Anwendungen nicht zufriedenstellend ist.

Aufgabe der vorliegenden Erfindung ist die Bereitstellung von schlagzähmodifizierten Polyalkylenterephthalt/Polycarbonat-Zusammensetzungen mit einer optimalen Kombination aus hoher Wärmeformbeständigkeit, gutem Flammschutz und exzellenten mechanischen Eigenschaften (insbesondere hoher E-Modul).

Es wurde nun überraschend gefunden, dass Formmassen bzw. Zusammensetzungen enthaltend A) Polycarbonat, B) Polyalkylenterephthalat, C) kautschukmodifiziertes Pfropfpolymerisat und D) ein Salz einer Phosphinsäure das gewünschte Eigenschaftsprofil aufweisen.

Es wurde somit überraschend gefunden, dass Zusammensetzungen enthaltend
A) 57 bis 93 Gew.-Teile, besonders bevorzugt 64 bis 83 Gew.-Teile (jeweils bezogen auf die Summe der Gewichtsteile der Komponenten A+B+C+D) aromatisches Polycarbonat,
B) 2 bis 19 Gew.-Teile, vorzugsweise 4 bis 17 Gew.-Teile, besonders bevorzugt 7 bis 15 Gew.-Teile (jeweils bezogen auf die Summe der Gewichtsteile der Komponenten A+B+C+D) Polyalkylenterephthalat,
C) 0,5 bis 15 Gew.-Teile, bevorzugt 2 bis 11 Gew.-Teile, besonders bevorzugt 5 bis 9 Gew.-Teile (jeweils bezogen auf die Summe der Gewichtsteile der Komponenten A+B+C+D) kautschukmodifiziertes Pfropfpolymerisat,
D) 0,5 bis 25 Gew.-Teile, bevorzugt 1 bis 15 Gew.-Teile, besonders bevorzugt 7 bis 12 Gew.-Teile (jeweils bezogen auf die Summe der Gewichtsteile der Komponenten A+B+C+D) eines Salzes oder einer Mischung von Salzen einer Phosphinsäure der Formel (IV),
wobei alle Gewichtsteilangaben in der vorliegenden Anmeldung so normiert sind, dass die Summe der Gewichtsteile der Komponenten A+B+C+D in der Zusammensetzung 100 ergeben, die oben genannte technische Aufgabe lösen.

Ein zu hoher Gehalt an Komponente B) (d.h. 20 Gew.-Teile und mehr) hat den Nachteil, dass der Flammschutz nicht mehr den gestellten Anforderungen entspricht.

### Komponente A

Als Komponente A) enthalten die erfindungsgemäßen Zusammensetzungen erfindungsgemäß ein Polycarbonat oder eine Mischung von Polycarbonaten.

Bevorzugte Polycarbonate sind solche Homopolycarbonate und Copolycarbonate auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Bevorzugt sind Bisphenole der Formel (Ia) 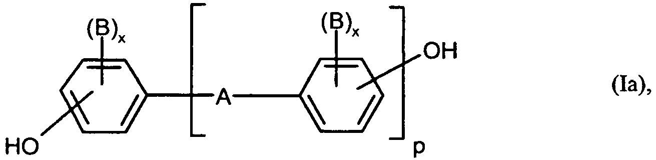 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,

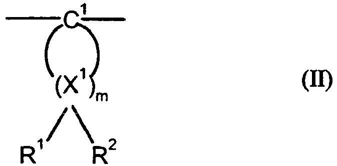

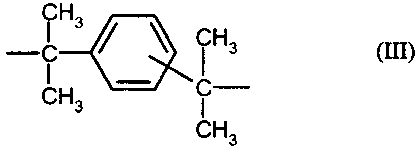

- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R²: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern JP-A 62039 1986, JP-A 62040 1986 und JP-A 105550 1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beispielsweise beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse (M̅_{w}), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α"-Tris-(4-hydroxyphenyl)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert. Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycarbonate im Sinne der Erfindung sind insbesondere Polydiorganosiloxan-Polycarbonat-Blockcopolymere, deren Gewichtsmittel der

molaren Masse (M̅_{w}) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxyendgruppenhaltigen Polydiorganosiloxanen mit einem mittleren Polymerisationsgrad von bevorzugt Pₙ = 5 bis 100, besonders bevorzugt Pₙ = 20 bis 80, hergestellt werden.

Den Polycarbonaten könne übliche Additive wie z.B. Entformungsmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

### Komponente B

Als Komponente B) enthalten die Zusammensetzungen erfindungsgemäß ein oder eine Mischung aus zwei oder mehr unterschiedlichen Polyalkylenterephthalaten. Polyalkylenterephthalate im Sinne der Erfindung sind Polyalkylenterephthalate, die sich von Terephthalsäure (oder ihren reaktionsfähigen Derivaten) und Alkandiolen beispielsweise auf Basis von Propylenglycol oder Butandiol ableiten. Erfindungsgemäß werden als Komponente B) bevorzugt Polyethylentherephthalat, Polybutylenterephthalat und/oder Polytrimethylenterephthalat, am meisten bevorzugt Polybutylenterephthalat eingesetzt.

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylenglykol- bzw. Propandiol-1,3- bzw. Butandiol-1,4-resten bis zu 20 Mol.-% anderer aliphatischer Diole mit 3 bis 12 C-Atomen oder cycloaliphatischer Diole mit 6 bis 21 C-Atomen enthalten, z.B. Reste von 1,3-Propandiol, 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methylpentan-2,4-diol, 2,2,4-Trimethylpentan-1,3-diol und 2-Ethylhexan-1,6-diol, 2,2-Diethylpropan-1,3-diol, 2,5-Hexandiol, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern wie Dimethylterephthalat) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im Allgemeinen eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Bevorzugt können die erfindungsgemäß hergestellten Polyester auch im Gemisch mit anderen Polyestern und/oder weiteren Polymeren eingesetzt werden. Besonders bevorzugt werden Gemische von Polyalkylenterephthalaten mit anderen Polyestern eingesetzt.

Den Polyestern können übliche Additive wie z.B. Entformungsmittel, Stabilisatoren und/oder Fließmittel in der Schmelze zugemischt oder auf der Oberfläche aufgebracht werden.

### Komponente C

Die Komponente C umfasst ein oder mehrere Pfropfpolymerisate von
C.1 5 bis 95, vorzugsweise 30 bis 90 Gew.-%, wenigstens eines Vinylmonomeren auf
C.2 95 bis 5, vorzugsweise 70 bis 10 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylcetat-Kautschuke.

Die Pfropfgrundlage C.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere C.1 sind vorzugsweise Gemische aus
C.1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
C.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-PhenylMaleinimid.

Bevorzugte Monomere C.1.1 sind ausgewählt aus mindestens einem der Monomere Styrol, α-Methylstyrol und Methylmethacrylat, bevorzugte Monomere C.1.2 sind ausgewählt aus mindestens einem der Monomere Acrylnitril, Maleinsäureanhydrid und Methylmethacrylat. Besonders bevorzugte Monomere sind C.1.1 Styrol und C.1.2 Acrylnitril.

Bevorzugte Pfropfgrundlagen C.2 sind Silikonacrylatkautschuke, Dienkautschuke (beispielsweise auf Basis Butadien und Isopren) oder Gemische von Dienkautschuken. Unter Dienkautschuke im erfindungsgemäßen Sinne sind auch Copolymerisate von Dienkautschuken oder deren Gemischen mit weiteren copolymerisierbaren Monomeren (z.B. gemäß C.1.1 und C.1.2) zu verstehen. Die Pfropfgrundlagen B.2 weisen im allgemeinen eine Glasübergangstemperatur von < 10°C, vorzugsweise < 0°C, besonders bevorzugt < -10°C auf.

Besonders bevorzugte Polymerisate C sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage C.2 beträgt mindestens 20 Gew.-%, im Falle von im Emulsionspolymerisation hergestellten Pfropfgrundlagen C.2 vorzugsweise mindestens 40 Gew.-% (in Toluol gemessen).

Vorzugsweise weist das Pfropfpolymerisat aus den Komponenten C.1 und C.2 eine Kem-Schale-Struktur auf, wobei die Komponente C.1 die Schale bildet (auch als Hülle bezeichnet) und die Komponente C.2 den Kern ausbildet (siehe bspw. Ullmann's Encyclopedia of Industrial Chemistry, VCH-Verlag, Vol. A21, 1992, Seite 635 und Seite 656.

Die Pfropfcopolymerisate C werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß C.2 der Polymerisate C sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage C.2. Bei cyclischen vernetzenden Monomeren mit mindestens drei ethylenisch ungesättigten Gruppen ist es vorteilhaft, die Menge auf unter 1 Gew.-% der Pfropfgrundlage C.2 zu beschränken.

Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage C.2 sind Emulsionspolymerisate, die einen Gelgehalt von mindestens 60 Gew.-% aufweisen.

Geeignete Silikonkautschuke gemäß C.2. können durch Emulsionspolymerisation hergestellt werden, wie beispielsweise in US 2891920 und US 3294725 beschrieben. Weitere geeignete Pfropfgrundlagen gemäß C.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlagen C.2 sind erfindungsgemäß auch Silikonacrylat-Kautschuke geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen. Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigkeit der fertigen Harzzusammensetzung nachteilig beeinflusst).Silikonacrylat-Kautschuke sind bekannt und beispielsweise beschrieben in US 5,807,914, EP 430134 und US 4888388. Vorzugsweise eingesetzt wird ein in Emulsionspolymerisation hergestelltes Pfropfpolymer mit C.1 Methylmetacrylat und C.2 Silikonacrylat-Komposit-Kautschuk.

Der Gelgehalt der Pfropfgrundlage C.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

### Komponente D

Es wird ein Salz oder eine Mischung von Salzen einer Phosphinsäure der Formel (IV) eingesetzt, 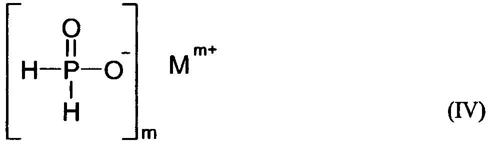 worin M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (IV)
für m = 1 die Metallkationen M⁺= Li⁺, Na⁺, K⁺,
für m = 2 die Metallkationen M²⁺ = Mg²⁺, Ca²⁺,Sr²⁺, Ba²⁺ und
für m = 3 die Metallkationen M³⁺ = Al³⁺,
höchst bevorzugt sind Ca²⁺ (m = 2) und Al³⁺ (m = 3).

In einer bevorzugten Ausführungsform ist die mittlere Teilchengröße d₅₀ des Phosphinsäuresalzes (Komponente D) kleiner als 80 µm, vorzugsweise kleiner als 60 µm, besonders bevorzugt ist d₅₀ zwischen 10 µm und 55 µm. Die mittlere Teilchengröße d₅₀ ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße d₅₀ unterscheiden.

Diese Anforderungen an die Teilchengröße d₅₀ des Phosphinsäuresalzes sind jeweils mit dem technischen Effekt verbunden, dass die Flammschutzeffizienz des Phosphinsäuresalzes erhöht ist.

Das Phosphinsäuresalz kann entweder alleine oder in Kombination mit anderen phosphorhaltigen Flammschutzmitteln eingesetzt werden. Vorzugsweise sind die erfindungsgemäßen Zusammensetzungen frei von phosphorhaltigen Flammschutzmitteln ausgewählt aus den Gruppe der Mono- und oligomeren Phosphor- und Phosphonsäureester, Phosphonatamine und Phosphazene. Diese anderen phosphorhaltigen Flammschutzmitteln wie beispielsweise die Mono- und oligomeren Phosphor- und Phosphonsäureester besitzen gegenüber den Phosphinsäuresalzen den Nachteil, dass diese die Wärmeformbeständigkeit der Formmassen herabsetzen.

### Komponente E

Die Komponente E umfasst ein oder mehrere thermoplastische Vinyl(Co)Polymerisate E.1.

Geeignet sind als Vinyl(Co)Polymerisate E. Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
E.1.1 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
E.1.2 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate E.1 sind harzartig, thermoplastisch und kautschukfrei. Besonders bevorzugt ist das Copolymerisat aus E.1.1 Styrol und E.1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

### Komponente F

Die Zusammensetzung kann weitere handelsübliche Zusatzstoffe gemäß Komponente F) wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl-Sulfonate oder Polyamid-haltige Polymere), Säuren, Füll- und Verstärkungsstoffe (beispielsweise Glas- oder Karbonfasem, Glimmer, Kaolin, Talk, CaCO₃ und Glasschuppen) sowie Farbstoffe und Pigmente enthalten. Die fluorierten Polyolefine werden vorzugsweise in Form einer koagulierten Mischung von Emulsionen fluorierter Polyolefine mit Emulsionen eines Vinyl(Co)Polymerisats E.1, besonders bevorzugt mit Emulsionen eines Copolymerisats auf Styrol-Acrylnitril-Basis eingesetzt

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 260°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

### Beispiele

### Komponente A

Lineares Polycarbonat auf Basis Bisphenol A mit einer relativen Lösungsviskosität von ηᵣₑₖ = 1,315 ± 0,05 gemessen in CH₂Cl₂ als Lösungsmittel bei 25°C und einer Konzentration von 0,5 g/100 ml.

### Komponente B-1

Lineares Polyethylenterephthalat mit einer Schmelzviskosität nach DIN 54 811 von 275 Pa·s bei 265°C und bei einer Scherrate von 500 s⁻¹ (Invista RT-6012, INVISTA Resins & Fibers GmbH, Hattersheim am Main, Deutschland)

### Komponente B-2

Lineares Polybutylenterephthalat mit einer Schmelzviskosität nach DIN 54 811 von 622 Pa·s bei 240°C und bei einer Scherrate von 500 s⁻¹ (Invista RT-6012, INVISTA Resins & Fibers GmbH, Hattersheim am Main, Deutschland)

### Komponente C

ABS-Pfropfpolymerisat, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks (mittlerer Teilchen-durchmesser d₅₀ = 0,3 bis 0,4 µm).

### Komponente D

### Komponente D-1 (Vergleich)

Bisphenol-A-basierendes Oligophosphat

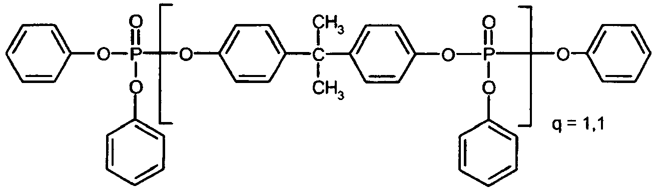

### Komponente D-2

Calciumphosphinat, mittlere Teilchengröße d₅₀= 50 µm.

### Komponente F

| | |
|---|---|
| Komponente F-1: | Koagulierte Mischung von Emulsionen fluorierter Polyolefine mit Emulsionen eines Copolymerisats auf Styrol-Acrylnitril-Basis (Blendex^{®} 449 der Fa. Chemtura). |
| Komponente F-2: | Pentaerythrittetrastearat |
| Komponente F-3: | Irganox B900 (Hersteller: Ciba Specialty Chemicals Inc., Basel, Schweiz) |

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 18 kg/h bei einer Maschinentemperatur von 260°C compoundiert und granuliert.

Die fertigen Granulate werden auf einer Spritzgussmaschine zu den entsprechenden Probekörpern verarbeitet (Massetemperatur 260°C, Werkzeugtemperatur 80°C, Fließfrontgeschwindigkeit 240 mm/s).

Die Charakterisierung erfolgt gemäß ISO 527-1/-2 (Zug-E-Modul), ISO 306 (Vicat-Erweichungstemperatur, Verfahren B mit 50 N Belastung und einer Heizrate von 120 K/h), ISO 75-1/-2 (Heat Distortion Temperature HDT, Methode Af mit einer Biegespannung von 1,80 MPa und Methode Bf mit einer Biegespannung von 0,45 MPa) und UL 94 V in 3,0 mm und 1,5 mm Dicke.

Aus Tabelle 1 ist ersichtlich, dass nur die erfindungsgemäßen Zusammensetzungen in den Beispielen 4, 5, 6 und 10, 11, 12 mit einer Kombination aus Polycarbonat, Polyester und Calciumphosphinat die erfindungsgemäße Aufgabe lösen, d.h. eine Kombination aus hohem E-Modul, hoher Wärmeformbeständigkeit und guter Performance im UL94V-Test ergeben.

**Tabelle 1: Zusammensetzungen und ihre Eigenschaften**

| **Zusammensetzung** | | **1 Vgl.** | **2 Vgl.** | **3 Vgl.** | **4** | **5** | **6** | **7 Vgl.** | **8 Vgl.** | **9 Vgl.** | **10** | **11** | **12** |
|---|---|---|---|---|---|---|---|---|---|---|---|---|---|
| **A** | Gew.-Tle. | 75,7 | 69,6 | 63,5 | 75,7 | 69,6 | 63,5 | 75,7 | 69,6 | 63,5 | 75,7 | 69,6 | 63,5 |
| **B-1** | Gew.-Tle. | 6,1 | 12,2 | 18,3 | 6,1 | 12,2 | 18,3 | | | | | | |
| **B-2** | Gew.-Tle. | | | | | | | 6,1 | 12,2 | 18,3 | 6,1 | 12,2 | 18,3 |
| **C** | Gew.-Tle. | 8,1 | 8,1 | 8,1 | 8,1 | 8,1 | 8,1 | 8,1 | 8,1 | 8,1 | 8,1 | 8,1 | 8,1 |
| **D-1** | Gew.-Tle. | 10,1 | 10,1 | 10,1 | | | | 10,1 | 10,1 | 10,1 | | | |
| **D-2** | Gew.-Tle. | | | | 10,1 | 10,1 | 10,1 | | | | 10,1 | 10,1 | 10,1 |
| **F-1** | Gew.-Tle. | 1,0 | 1,0 | 1,0 | 1,0 | 1,0 | 1,0 | 1,0 | 1,0 | 1,0 | 1,0 | 1,0 | 1,0 |
| **F-2** | Gew.-Tle. | 0,2 | 0,2 | 0,2 | 0,2 | 0,2 | 0,2 | 0,2 | 0,2 | 0,2 | 0,2 | 0,2 | 0,2 |
| **F-3** | Gew.-Tle. | 0,2 | 0,2 | 0,2 | 0,2 | 0,2 | 0,2 | 0,2 | 0,2 | 0,2 | 0,2 | 0,2 | 0,2 |

| **Eigenschaften** | | | | | | | | | | | | | |
|---|---|---|---|---|---|---|---|---|---|---|---|---|---|
| Zug-E-Modul (ISO 527-1/-2) | MPa | 2604 | 2628 | 2653 | 2786 | 2871 | 2942 | 2545 | 2586 | 2624 | 2757 | 2797 | 2843 |
| Vicat B 120 (ISO 306) | °C | 107 | 106 | 103 | 137 | 138 | 138 | 103 | 100 | 99 | 130 | 126 | 127 |
| HDT Methode Af (ISO 75-1/- 2) | °C | 89 | 88 | 84 | 118 | 118 | 112 | 85 | 81 | 77 | 110 | 102 | 98 |
| HDT Methode Bf (ISO 75-1/- 2) | °C | 100 | 98 | 95 | 131 | 130 | 129 | 95 | 90 | 88 | 122 | 114 | 113 |
| UL 94 V 1.5 mm Bewertung | | V0 | V0 | V0 | V0 | V0 | V0 | V0 | V0 | V1 | V0 | V0 | V0 |
| UL 94 V 1.5 mm Gesamt-NBZ | s | 7 | 9 | 25 | 8 | 12 | 9 | 12 | 22 | 81 | 10 | 9 | 27 |
| UL 94 V 3.0 mm Bewertung | | V0 | V0 | V0 | vo | V0 | V0 | vo | V0 | vo | vo | V0 | V0 |
| UL 94 V 3.0 mm Gesamt-NBZ | s | 7 | 7 | 12 | 6 | 7 | 5 | 10 | 8 | 10 | 6 | 6 | 8 |

| | | | | | | | | | | | | | |
|---|---|---|---|---|---|---|---|---|---|---|---|---|---|
| NBZ = Nachbrennzeit | | | | | | | | | | | | | |

## Patentansprüche

1. Zusammensetzung enthaltend
A) 57 bis 93 Gew.-Teile (jeweils bezogen auf die Summe der Gewichtsteile der Komponenten A+B+C+D) aromatisches Polycarbonat,
B) 2 bis 19 Gew.-Teile (jeweils bezogen auf die Summe der Gewichtsteile der Komponenten A+B+C+D) Polyalkylenterephthalat,
C) 0,5 bis 15 Gew.-Teile (jeweils bezogen auf die Summe der Gewichtsteile der Komponenten A+B+C+D) kautschukmodifiziertes Pfropfpolymerisat,
D) 0,5 bis 25 Gew.-Teile (jeweils bezogen auf die Summe der Gewichtsteile der Komponenten A+B+C+D) eines Salzes oder einer Mischung von Salzen einer Phosphinsäure der Formel (IV). 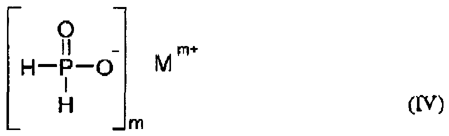 worin
M^{m+} ein Metallkation der 1. Hauptgruppe (Alkalimetalle; m = 1), 2, Hauptgruppe (Erdalkalimetalle: m = 2) oder der 3, Hauptgruppe (m = 3) oder der 2 7. oder 8. Nebengruppe (wobei m eine ganze Zahl von 1 bis 6, bedeutet) des Periodensystems ist.

2. Zusammensetzung gemäß Anspruch 1, enthaltend 4 bis 17 Gew.-Teile (jeweils bezogen auf die Summe der Gewichtsteile der Komponenten A+B+C+D) Polyalkylenterephthalat gemäß Komponente B).

3. Zusammensetzung gemäß Anspruch 1 oder 2, enthaltend 7 bis 12 Gew.-Teile (jeweils bezogen auf die Summe der Gewichtsteile der Komponenten A+B+C+D) eines Salzes einer Phosphinsäure gemäß Komponente D).

4. Zusammensetzung gemäß einem der Ansprüche 1 bis 3, enthaltend 5 bis 9 Gew.-Teile (jeweils bezogen auf die Summe der Gewichtsteile der Komponenten A+B+C+D) kautschukmodifiziertes Pfropfpolymerisat gemäß Komponente C).

5. Zusammensetzung gemäß einem der Ansprüche 1 bis 4, enthaltend 0 bis 20 Gew.-Teile (bezogen auf die Summe der Gewichtsteile der Komponenten A+B+C+D = 100) kautschukfreies Vinyl(Co)Polymerisat als Komponente E).

6. Zusammensetzung gemäß einem der Ansprüche 1 bis 5, enthaltend 0 bis 50 Gew.-Teile (jeweils bezogen auf die Summe der Gewichtsteile der Komponenten A+B+C+D = 100) Zusatzstoffe als Komponente F).

7. Zusammensetzung gemäß einem der Ansprüche 1 bis 6, enthaltend als Komponente C) ein oder mehrere Pfropfpolymerisate von
C.1 5 bis 95 Gew.-%, wenigstens eines Vinylmonomeren auf
C.2 95 bis 5 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylcetat-Kautschuke.

8. Zusammensetzung gemäß einem der Ansprüche 1 bis 7, enthaltend als Komponente B) Polyethylentherephthalat, Polybutylenterephthalat und/oder Polytrimethylenterephthalat.

9. Zusammensetzung gemäß Anspruch 1, enthaltend als Komponente D) ein Salz oder eine Mischung von Salzen einer Phosphinsäure, wobei das Metallkation Li⁺, Na⁺, K⁺, Mg²⁺, Ca²⁺, Sr²⁺, Ba²⁺, Al³⁺, Zn²⁺, Mn²⁺, Fe²⁺ und/oder Fe³⁺ ist.

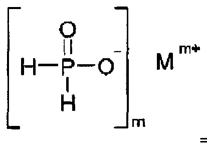

10. Zusammensetzung gemäß Anspruch 9 wobei M^{m+} = Ca²⁺ und m = 2 ist oder M^{m+} = Al³⁺ und m = 3 ist.

11. Zusammensetzung gemäß einem der Ansprüche 1 bis 10, wobei die Zusammensetzung frei ist von phosphorhaltigen Flammschutzmitteln ausgewählt aus den Gruppe der Mono- und oligomeren Phosphor- und Phosphonsäureester, Phosphonatamine und Phosphazene.

12. Zusammensetzung gemäß einem der Ansprüche 1 bis 11, wobei die handelsüblichen Zusatzstoffe gemäß Komponente F) Flammschutzsynergisten, Antidrippingmittel, Gleit- und Entformungsmittel, Nukleiermittel, Stabilisatoren, Antistatika, Säuren, Füll- und Verstärkungsstoffe sowie Farbstoffe und Pigmente sind.

13. Verwendung der Zusammensetzungen gemäß Anspruch 1 bis 12 zur Herstellung von Formkörper.

14. Formkörper, enthaltend eine Zusammensetzung nach einem der Ansprüche 1 bis 12.

## Claims

1. Composition comprising
A) 57 to 93 parts by weight (based in each case on the sum of the parts by weight of components A+B+C+D) of aromatic polycarbonate,
B) 2 to 19 parts by weight (based in each case on the sum of the parts by weight of components A+B+C+D) of polyalkylene terephthalate,
C) 0.5 to 15 parts by weight (based in each case on the sum of the parts by weight of components A+B+C+D) of rubber-modified graft polymer,
D) 0.5 to 25 parts by weight (based in each case on the sum of the parts by weight of components A+B+C+D) of a salt or a mixture of salts of a phosphinic acid of the formula (IV), 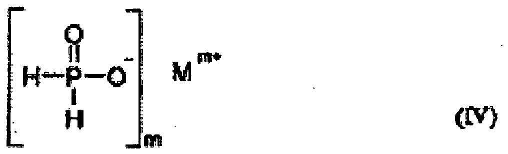 in which
M^{m+} is a metal cation from main group 1 (alkali metals; m = 1), main group 2 (alkaline earth metals: m = 2) or main group 3 (m = 3) or from transition group 2, 7 or 8 (in which case m denotes an integer from 1 to 6) of the periodic table.

2. Composition according to Claim 1, comprising 4 to 17 parts by weight (based in each case on the sum of the parts by weight of components A+B+C+D) of polyalkylene terephthalate as per component B).

3. Composition according to Claim 1 or 2, comprising 7 to 12 parts by weight (based in each case on the sum of the parts by weight of components A+B+C+D) of a salt of a phosphinic acid as per component D).

4. Composition according to any of Claims 1 to 3, comprising 5 to 9 parts by weight (based in each case on the sum of the parts by weight of components A+B+C+D) of rubber-modified graft polymer as per component C).

5. Composition according to any of Claims 1 to 4, comprising 0 to 20 parts by weight (based on the sum of the parts by weight of components A+B+C+D = 100) of rubber-free vinyl (co)polymer as per component E).

6. Composition according to any of Claims 1 to 5, comprising 0 to 50 parts by weight (based on the sum of the parts by weight of components A+B+C+D = 100) of additives as per component F).

7. Composition according to any of Claims 1 to 6, comprising as component C) one or more graft polymers of
C.1 5 to 95 wt.% of at least one vinyl monomer on
C.2 95 to 5 wt.% of at least one graft base selected from the group consisting of diene rubbers, EP(D)M rubbers (i.e. those based on ethylene/propylene and optionally diene), acrylate rubbers, polyurethane rubbers, silicone rubbers, silicone acrylate rubbers, chloroprene and ethylene/vinyl acetate rubbers.

8. Composition according to any of Claims 1 to 7, comprising as component B) polyethylene terephthalate, polybutylene terephthalate and/or polytrimethylene terephthalate.

9. Composition according to Claim 1, comprising as component D) a salt or a mixture of salts of a phosphinic acid where the metal cation is Li⁺, Na⁺, K⁺, Mg²⁺, Ca²⁺, Sr²⁺, Ba²⁺, Al³⁺, Zn²⁺, Mn²⁺, Fe²⁺ and/or Fe³⁺.

10. Composition according to Claim 9, wherein M^{m+} = Ca²⁺ and m = 2 or M^{m+} = Al³⁺ and m = 3.

11. Composition according to any of Claims 1 to 10, wherein the composition is free from phosphorus-containing flame retardants selected from the group of monomeric and oligomeric phosphoric and phosphonic esters, phosphonate amines and phosphazenes.

12. Composition according to any of Claims 1 to 11, wherein the commercially customary additives as per component F) are flame retardancy synergists, anti-dripping agents, lubricants, mould release agents, nucleating agents, stabilizers, antistats, acids, fillers, reinforcing agents, and dyes and pigments.

13. Use of the compositions according to Claim 1 to 12 for producing mouldings.

14. Mouldings comprising a composition according to any of Claims 1 to 12.

## Revendications

1. Composition contenant
A) 57 à 93 parties en poids (à chaque fois par rapport à la somme des parties en poids des composants A + B + C + D) de polycarbonate aromatique,
B) 2 à 19 parties en poids (à chaque fois par rapport à la somme des parties en poids des composants A + B + C + D) de poly(téréphtalate d'alkylène),
C) 0,5 à 15 parties en poids (à chaque fois par rapport à la somme des parties en poids des composants A + B + C + D) de polymère greffé modifié par du caoutchouc,
D) 0,5 à 25 parties en poids (à chaque fois par rapport à la somme des parties en poids des composants A + B + C + D) d'un sel ou d'un mélange de sels d'un acide phosphinique de formule (IV), 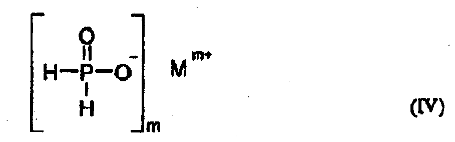 où
M^{m+} représente un cation métallique du 1er groupe principal (métaux alcalins : m = 1), du 2ème groupe principal (métaux alcalino-terreux : m = 2) ou du 3ème groupe principal (m = 3) ou du 2ème, 7ème ou 8ème groupe secondaire (m signifiant un nombre entier de 1 à 6) du système périodique.

2. Composition selon la revendication 1, contenant 4 à 17 parties en poids (à chaque fois par rapport à la somme des parties en poids des composants A + B + C + D) de poly(téréphtalate d'alkylène) selon le composant B).

3. Composition selon la revendication 1 ou 2, contenant 7 à 12 parties en poids (à chaque fois par rapport à la somme des parties en poids des composants A + B + C + D) d'un sel d'un acide phosphinique selon le composant D).

4. Composition selon l'une quelconque des revendications 1 à 3, contenant 5 à 9 parties en poids (à chaque fois par rapport à la somme des parties en poids des composants A + B + C + D) de polymère greffé modifié par du caoutchouc selon le composant C).

5. Composition selon l'une quelconque des revendications 1 à 4, contenant 0 à 20 parties en poids (par rapport à la somme des parties en poids des composants A + B + C + D = 100) de (co)polymère de vinyle exempt de caoutchouc comme composant E).

6. Composition selon l'une quelconque des revendications 1 à 5, contenant 0 à 50 parties en poids (à chaque fois par rapport à la somme des parties en poids des composants A + B + C + D = 100) d'additifs comme composant F).

7. Composition selon les revendications 1 à 6, contenant, comme composant C), un ou plusieurs polymères greffés de
C.1 5 à 95% en poids d'au moins un monomère de vinyle sur
C.2 95 à 5% en poids d'au moins une base de greffage choisie dans le groupe constitué par les caoutchoucs de diène, les caoutchoucs d'EP(D)M, (c'est-à-dire ceux à base d'éthylène/propylène et le cas échéant de diène), les caoutchoucs d'acrylate, de polyuréthane, de silicone, de silicone-acrylate, de chloroprène et d'éthylène/acétate de vinyle.

8. Composition selon l'une quelconque des revendications 1 à 7, contenant comme composant B) du poly(téréphtalate d'éthylène), du poly(téréphtalate de butylène) et/ou du poly(téréphtalate de triméthylène).

9. Composition selon la revendication 1, contenant comme composant D) un sel ou un mélange de sels d'un acide phosphinique, le cation métallique étant Li⁺, Na⁺, K⁺, Mg²⁺, Ca²⁺, Sr²⁺, Ba²⁺, Al³⁺, Zn²⁺, Mn²⁺, Fe²⁺ et/ou Fe³⁺.

10. Composition selon la revendication 9, M^{m+} = Ca²⁺ et m = 2 ou M^{m+} = Al³⁺ et m = 3.

11. Composition selon l'une quelconque des revendications 1 à 10, la composition étant exempte d'agents ignifuges contenant du phosphore, choisis dans le groupe des esters monomères et oligomères de l'acide phosphorique et phosphonique, des phosphonate-amines et des phosphazènes.

12. Composition selon l'une quelconque des revendications 1 à 11, les additifs usuels du commerce selon le composant F) étant des synergistes ignifuges, des agents anti-goutte, des lubrifiants et des agents de démoulage, des agents de nucléation, des stabilisateurs, des antistatiques, des acides, des charges et des substances de renforcement ainsi que des colorants et des pigments.

13. Utilisation des compositions selon la revendication 1 à 12 pour la production de corps moulés.

14. Corps moulés contenant une composition selon l'une quelconque des revendications 1 à 12.
